# EUROPEAN PATENT APPLICATION

(11) **EP 1 046 823 A2**
(43) Date of publication of application: **25.10.2000**
(21) Application number: 00660040.7
(22) Date of filing: 03.03.2000
(51) Int. Cl.: F15C 5/00, B01J 19/00

(54) **Valve apparatus for adjusting parallel flows, method for manufacturing a valve member of said apparatus, method for adjusting said flows as well as method for washing said apparatus**

(30) Priority: 22.04.1999 FI 990904
(71) Applicant: FLUILOGIC SYSTEMS OY, 02200 Espoo (FI)
(72) Inventor: Muukkonen, Kari, 02320 Espoo (FI)
(74) Representative: Saijonmaa, Olli-Pekka

(57) **Abstract**

The invention relates to a valve apparatus for adjusting parallel flows. Moreover, the invention comprises a method for manufacturing a valve member belonging to said apparatus, a method for adjusting parallel flows, a method for washing said apparatus and a dosing apparatus. The valve apparatus includes at least two valve members 1, la movable with respect to each other, in which members there are provided parallel channels 3 for said flows. The ends 4 of the channels are located on opposite sliding surfaces 2 belonging to the valve members, so that when the channel ends are matched, the flow paths are open, and when the channel ends are deviated, the flow paths are closed. Moreover, in at least one of the opposite sliding surfaces 2, there are made grooves 5 in between the channel ends 4. The grooves 5 can serve as washing channels in order to prevent contamination between parallel flows, in addition to which they serve, when manufacturing the valve member, as collectors of grinding dust and grinding paste. The grooves also make it possible to wash the sliding surfaces at a pressure that overcomes the force of the spring 19 charging the valve members, thus pushing the sliding surfaces apart. The flow adjustment according to the invention can be applied in simultaneously feeding small batches of liquid onto a microtiter plate 13 containing fluid positions 12 in a matrix-like fashion.

## Description

The invention relates to adjusting parallel flows by means of valve members. In connection with this, the objects of the invention are a valve apparatus, a method for manufacturing the valve member forming part of said apparatus, a method for adjusting parallel flows that utilises said apparatus, a method for washing the apparatus and, as a special embodiment of the apparatus, an apparatus for feeding small quantities of liquid.

The adjusting of parallel flows, comprising the simultaneous opening and closing of parallel flow channels, is needed in the treatment of small quantities of liquid. In biomedical testing, there are used microtiter plates with adjacent fluid positions arranged in a matrix-like fashion in vertical and horizontal rows, said fluid positions being filled simultaneously in the plate production. A common number of fluid positions on a plate is 96 positions in a 8 x 12 matrix, in a 9 mm square chart. However, a growing tendency is a plate with the same area but 384 fluid positions in a 16 x 24 matrix, the intervals between the fluid positions being 4.5 mm; further, a new plate with 1536 fluid positions at 2.25 mm intervals, still within the same area, is being adopted. Consequently, the high - and still growing - packing density of fluid positions requires an extremely small size of the valve members used in the dosing process. Apart from filling fluid positions, such valves are also needed in tests and other practical applications utilising the fluid batches packed on the plate.

A typical production-scale dosing device used for filling microtiter plates is based on a ceramic rotating pump, where the valve functions are realised by a complicated series of movements of the piston. This type of device is sufficiently accurate for dosing fluid batches of the order of tens of microlitres, but in practice it cannot be reduced to a size where the dosing of fluid batches measured in nanolitres would be possible. In addition, the input and output apertures and channels required by each piston take up so much space, that in comparison with the smallest batches of liquid, a manifold amount of liquid would be lost in the pipework. Consequently, the need for a new valve apparatus that enables an increased packing density is obvious.

Another thing to be observed as regards the use of microtiter plates is the fact that in the various fluid positions of the plate, there are typically fed different reagents. Moreover, it is possible that in production, different reagents are fed on different plates. This means that in a simultaneous feeding of the reagents, contamination between different reagents must be prevented, and that when changing reagents, it must be possible to wash the plates clean of the remnants of the previous reagents prior to feeding the next batch. Thus an important additional requirement for the new arrangement is that the valve structure must be realised so that contamination is prevented and the fluid channels are made easily washable.

According to what is stated above, the object of the invention is to realise a new arrangement for adjusting parallel flows, said arrangement enabling an increased packing density of the flow channels, and also providing means for preventing contamination between flows and for washing the valve members while the circulation is interrupted.

The valve apparatus according to the invention is characterised in that it comprises at least two mutually movable valve members containing channels as parts of adjacent flow paths, the ends of said channels being located at opposite sliding surfaces belonging to the valve members, so that in a mutual position of said surfaces where the channel ends are matched, the flow paths are open, and in a position where the channel ends do not match, the flow paths are closed, and that at least in one of said opposite sliding surfaces of the valve members, there are provided grooves in between the channel ends.

In an apparatus according to the invention, each of the parallel flow paths thus comprises channels as continuations of each other, of which channels, one is located in one the other in the other of said opposite valve members. A characteristic feature of the apparatus is that all flow paths are opened and closed simultaneously; on the lowest level, the adjustment is based on two mutually movable parts only, and therefore it is possible to fit an extremely large amount of narrow channels on a small area, in accordance with the packing density of the most advanced microtiter plates. Respectively, in its simplest form the apparatus only comprises one grindable pair of sliding surfaces, and the prevention of transversal leaks from the channels depends on the smoothness of said surfaces.

The grooves that are formed in the sliding surface according to the invention have two tasks, of which at least one, depending on the embodiment in question, is essential for the invention; in most cases both tasks are important. First of all, the grooves can be used as washing channels in order to prevent contamination between adjacent flows. By arranging in the grooves a washing circulation with a pressure lower than the pressure of the circulations penetrating the valve apparatus, the washing circulation collects possible leaks taking place in between the sliding surfaces and thus prevents the adjacent flows from being mixed. Secondly, the grooves are important when manufacturing the apparatus, because during the grinding of the sliding surfaces of the valve members, the grinding dust and extra grinding paste are accumulated in said grooves, which makes the grinding easier and helps to achieve a smoother result. This is a remarkable advantage even in a case where the grooves are not used for washing, for instance when the parallel flows consist of one and the same liquid, in which case they cannot contaminate each other.

Within the scope of the invention it is possible that the grooves are provided only in one of the opposite sliding surfaces of the valve members. For instance from the point of view of a washing circulation for preventing contamination, this is a perfectly adequate solution. However, said smoothness in the grinding of the sliding surfaces favours a solution where both of the opposite sliding surfaces are provided with grooves.

Preferably the opposite sliding surfaces of the valve members according to the invention are planar surfaces. For instance a rectangular surface may comprise the ends of the channels contained by the valve members, as arranged in a matrix made of vertical and horizontal rows at regular intervals, the measures of said matrix corresponding to the number of fluid positions on the microtiter plate, for the filling of which microtiter plate the valve apparatus in question can be applied. The washing grooves can advantageously be arranged as a regular lattice covering the sliding surface in between the channel ends, i.e. in between said vertical and horizontal rows of the matrix. Each of the opposite sliding surfaces can be provided with a lattice-like washing channel network, in which case the channels are positioned against each other when the flow paths are open, but it also is possible that each of the surfaces is provided with mutually parallel washing grooves only, in which case the lattice is created when the surfaces are placed against each other, or that the lattice is only provided in one of the surfaces.

A simple form for a valve member is a mainly homogeneous plate, through which the flow channels are conducted at right angles with respect to the planar sliding surface of the plate. Advantageously this kind of a valve plate can be the middlemost of three valve plates or the like placed against each other, in an apparatus where the opening and closing of the flow paths is carried out by shifting the middlemost plate in a linear fashion with respect to the two plates on both sides.

According to a preferred embodiment of the invention, the valve members are charged against each other by means of a pressure spring. This embodiment facilitates a solution where the washing liquid fed at a sufficiently high pressure in between the sliding surfaces via the washing grooves overcomes the spring force and pushes the surfaces apart, so that the washing liquid is spread along the whole area of the sliding surfaces. When the valve members used for dosing are sterilised at a temperature of about 120 - 130° C and thereafter dried in an autoclave, the sliding surfaces must be clean of all previously fed liquids in order to prevent the surfaces from sticking together during the drying process.

The materials employed in the sliding surfaces of the valve members can be ceramics generally used in valves, such as aluminium oxide, which can be ground smooth and is wear-resistant. An even harder and more durable surface can, however, be achieved by diamond coating, in which case the valve member can, apart from the coating, be made of metal, such as steel. Among the advantages of steel, as compared with aluminium oxide, are its non-breakability and better workability; unlike ceramics, a plate-like valve member made of steel does not require a separate protecting frame around it. As regards the higher wear resistance of diamond, it is an advantage in continuously operated production processes.

The method according to the invention for manufacturing a valve member for the above described valve apparatus is characterised in that in the valve member, there are formed flow channels, and on the member surface, in between the channel ends, there are formed grooves, and that thereafter said surface is ground as a smooth sliding surface by using grinding paste, which during the grinding process is collected and removed from between the surfaces via the grooves.

The method according to the invention for adjusting parallel flows, in which method the above described valve apparatus according to the invention is applied, is characterised in that when the flow paths included in the apparatus are open, through them there is conducted, at a lower pressure, a washing circulation via grooves provided at least in one of the facing surfaces of the valve members, in order to prevent the separate flows from being contaminated.

In the preferred embodiments of the invention, for instance in the above described filling of microtiter plates, the adjustable flows are liquid flows, and a washing liquid is used for preventing contamination. However, said flows can also be gas flows; the only essential feature is that the washing circulation washes away all possible leaks, and that owing to a pressure difference, the leak always proceeds towards the washing circulation and not vice versa.

When dosing small batches of liquid on a microtiter plate, there are needed, in addition to the flow adjustment, members, such as pumps, that set the liquid flows in motion. In a preferred embodiment, the invention comprises a dosing apparatus that includes a source for the liquids to be fed, pumping members for creating parallel liquid flows and at least one valve apparatus of the above described type according to the invention. In an advantageous arrangement, the valve apparatus for opening and closing flow paths is placed both on the suction and discharge sides of the pumping members. A suitable pumping member is for example a piston that is provided with a hole and moves back and forth in the cylinder, or a bellows that moves back and forth. Thus the reagents to be fed in can be sucked from the reagent containers into the bellows when the suction-side flow paths are open and the discharge-side flow paths are closed, whereafter the suction-side valves are closed and the discharge-side valves are opened, so that the reagent batches to be dosed can be fed by means of the pumping members onto the microtiter plate through the flow channels. When the pumping members are coupled to common frame parts, whereby they are manipulated, the simultaneous filling of all fluid positions on the microtiter plate can be controlled simply by means of a back and forth motion of a few structural parts that are common for the parallel flow paths.

The invention is described in more detail below by way of an example and with respect to the appended drawings, wherein
- Figure 1: illustrates a plate-like valve member of a valve apparatus according to the invention, seen from the top so that there are shown the channel ends located on the sliding surface, as well as the washing grooves placed in between channel ends,
- Figure 2: illustrates the valve plate of figure 1, seen along the section II - II,
- Figure 3: illustrates another valve plate of the valve apparatus, with a sliding surface which is similar to the one illustrated in figure 1, but is arranged to be moved back and forth in a linear fashion in order to open and close the flow paths,
- Figure 4: illustrates a dosing arrangement according to the invention, comprising reagent tanks, bellows and a dosing apparatus composed of valve apparatuses placed on both sides of said bellows in order to feed the reagents simultaneously, in which arrangement each of the valve apparatuses consists of metal plates conforming to figures 1 and 3 and facing each other, at a stage where the pumping means have carried out the suction of the reagents, and
- Figure 5: illustrates the dosing arrangement according to figure 4 at a stage where the pumping means have injected the reagent batches to be fed onto the microtiter plate.

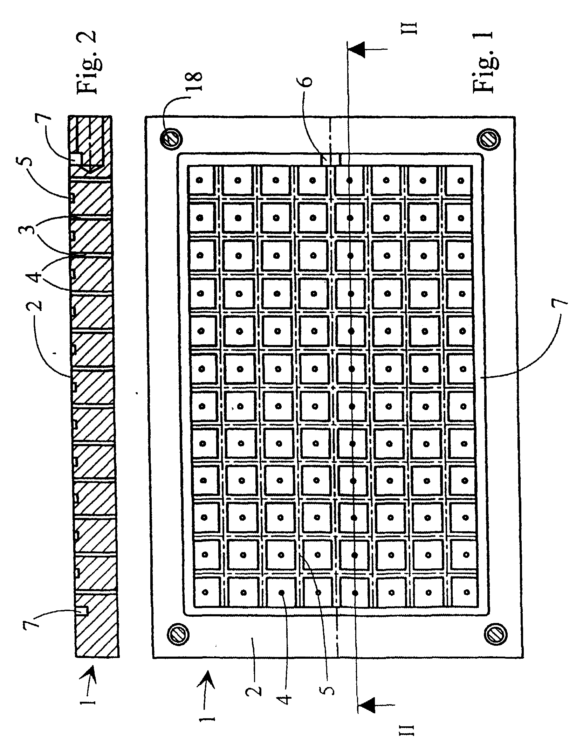

In figures 1 and 2, there is seen a single rectangular valve plate 1 belonging to the valve apparatus according to the invention, the top surface of said plate 1 being made a sliding surface 2 as smooth as possible. The valve plate 1 is penetrated by 96 flow channels 3 perpendicular to the sliding surface 2, and the ends 4 of said flow channels 3 form a 8 x 12 matrix made of vertical and horizontal rows at regular intervals. In the sliding surface 2, between the channel ends 4, there is provided a lattice made of washing grooves 5, which isolates the channel ends from each other. At an end of the valve plate 1 there is provided a feed or discharge aperture 6 for the washing circulation connected to the distributing or collecting grooves 7 surrounding the edges of said lattice. Said grooves can distribute the washing liquid in the washing grooves 5 along the whole area of the lattice, or collect the washing liquid discharged from the grooves from the whole area of the lattice, as will be explained in more detail below.

The valve plate 1 according to figures 1 and 2 can be made of steel, the surface 2 whereof is coated with a thin diamond coating. The diamond coating renders the best possible wear resistance for the sliding surface 2. Alternative materials for the valve plate 1 are ceramics, such as aluminium oxide. A ceramic valve plate 1 is advantageously made by first providing the plate-like object with flow channels 3 and washing grooves 5, 7, and by thereafter grinding the sliding surface 2 by using grinding paste as a medium. By following this procedure, the grinding dust and extra grinding paste are during the grinding process conducted to the washing grooves, which makes grinding easier and helps in achieving a smoother result. The smoothness of the sliding surface 2 lowers friction, improves the wear resistance of the surface and above all reduces possible leaks taking place from the flow channels 3 along the sliding surface to the washing grooves 5.

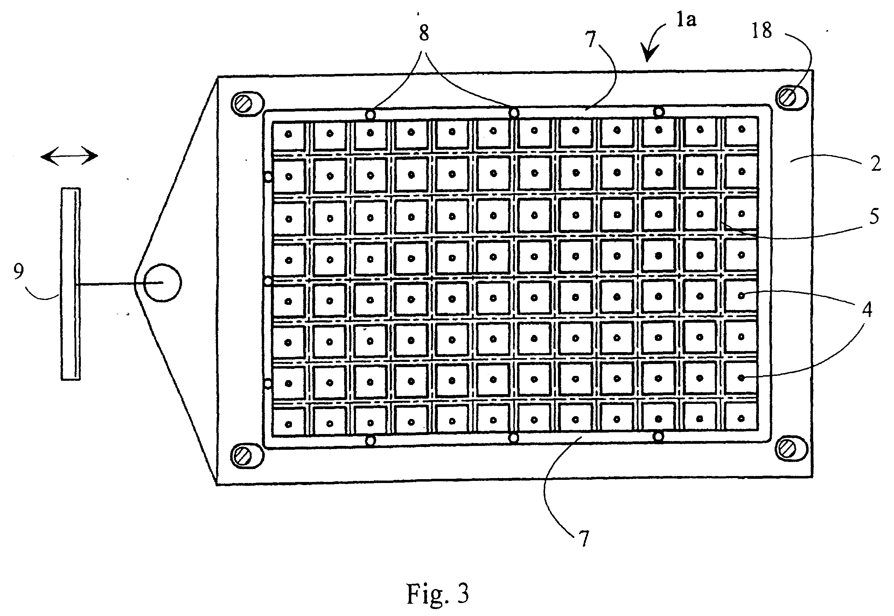

In order to operate, the valve apparatus requires two or more valve members, the sliding surfaces whereof are located against each other in a sliding contact. In figure 3, there is seen a valve plate la, which for the major part corresponds to the one illustrated in figures 1 and 2. However, both the top and bottom surfaces of this valve plate are made as a sliding surface 2 provided with washing grooves 5, 7. Instead of the washing circulation conduit 6 seen in figure 1, in the valve plate la there are provided, at the distributing or collecting grooves 7, apertures 8 for the washing liquid to flow through. Moreover, the valve plate 1 is provided with an actuator 9 in order to achieve a linear back and forth movement for the plate 9.

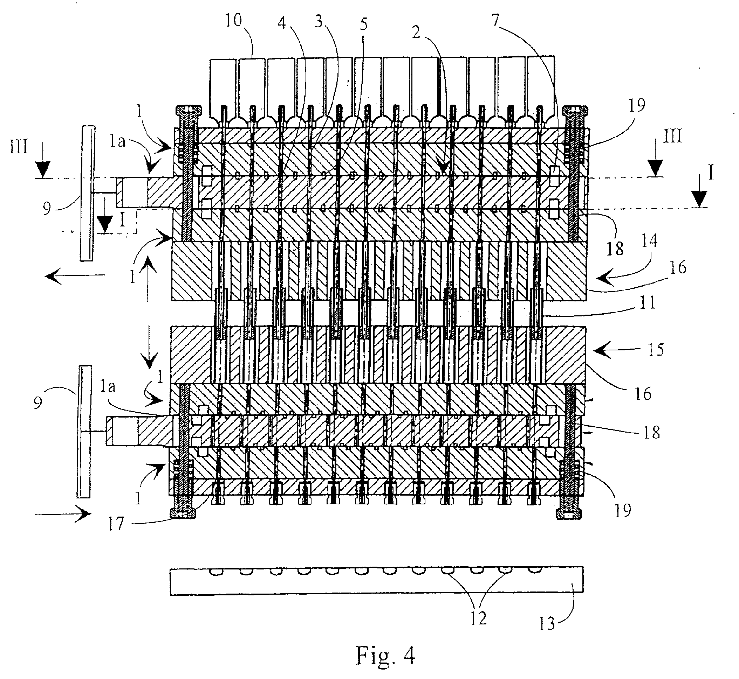

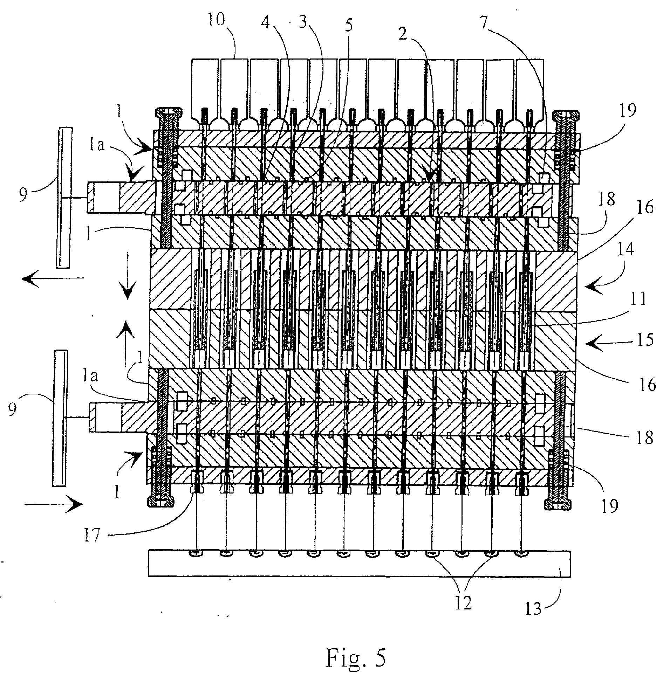

The valve plates 1, la according to figures 1 - 3 are meant for a valve apparatus where a back and forth moving plate la according to figure 3 is placed in between two stationarily installed plates 1 according to figure 1. In the dosing arrangement illustrated figures 4 and 5, there are two such valve apparatuses composed of three valve plates 1, la, and said valve apparatuses are seen in the drawings in both of their two functional positions, i.e. when the flow paths formed by the channels 3 are open and when they are closed. Higher in figure 4, there is illustrated an open valve apparatus above the back and forth movable pumping members, and lower in figure 4 there is seen a closed valve apparatus underneath the pumping members, whereas the situation in figure 5 is the opposite. The dosing carried out according to figures 4 and 5 will be discussed further below.

When the valve apparatus is open for the liquid to flow through, the opposite valve plates 1, la are positioned so that their flow channels 3 are matched. Thus all 96 parallel flow paths of the arrangement are open simultaneously. By means of the washing liquid flowing in the washing grooves 5 provided in between the sliding surfaces 2 of the valve plates, contamination between adjacent flows is prevented. The washing circulation is conducted to the valve apparatus through the flow conduit 6 serving as the feed conduit in the first of the stationary valve plates 1, wherefrom it is distributed to the washing grooves 5 placed in between the channels 3, at matching locations in the sliding surfaces 2; thereafter the washing circulation proceeds, via the flow apertures 8, to the opposite side of the middlemost movable valve plate 1a, is there distributed to the washing grooves 5 in between the sliding surfaces and is finally discharged to the flow conduit 6 serving as a discharge conduit in the second of the stationary plates 1. When the pressure of the washing circulation is lower than the pressure of the liquid flow in the flow channels 3, the possible leaks in between the sliding surfaces 2 are directed to the washing grooves 5, where the slowly circulating washing liquid carries the leaked liquid out of the arrangement.

The valve apparatus is closed by means of a linear motion of the middlemost valve plate 1a, generated by an actuator 9, which motion shifts the flow channels of said plate from a matching position with the flow channels of the other two flow plates 1 so much that the flow paths are cut. Thus all parallel flow paths of the valve apparatus are closed simultaneously. The valve apparatus is reopened by means of a shift of the actuator 9 in the opposite direction.

The dosing apparatus illustrated in figures 4 and 5 feeds small quantities of liquid from reagent tanks 10, by means of pistons 11 provided with holes and moving in cylinders serving as the pumping members, onto a microtiter plate 13 comprising 8 x 12 fluid positions 12. The dosing arrangement is composed of two structural units 14, 15, and by means of a mutual back and forth movement of said units, there are operated the pistons 11 which serve as a connecting member between said structural units. The structural unit 14 located on the suction side of the pumping members 11 comprises reagent tanks 10, a valve apparatus complete with valve plates 1, la, as well as a frame 16 to which the pistons are attached. On the discharge side of the pumping members 11, the structural unit 15 respectively comprises a frame 16 supporting a bellows, a valve apparatus complete with valve plates 1, la as well as nozzle members 17 for injecting fluid batches onto the microtiter plate 13. In both valve apparatuses, the stacked three valve plates 1, la are interconnected by means of bars 18 located at the plate corners and lightly pressed against each other by springs 19. The bars 18 allow the valve plates to move with respect to each other in the direction of the bars against the springs 19, as well as the middlemost valve plate la to move sideways in order to open and close the flow paths 3, as is described in the specification above.

In figure 4, the dosing arrangement is at the suction stage, where the valve apparatus of the suction side of the pumping members 11 is open, i.e. the flow paths from the reagent tank 10 to the bellows are open. On the discharge side of the pumping members, the valve apparatus is now closed. According to the drawing, the structural units 14, 15 of the arrangement are drawn apart in order to increase the spaces bordered by the pistons and cylinders, whereby the fluid batches to be dosed are sucked from the reagent tanks 10 to said spaces. In the next discharge, i.e. injection step according to figure 5, the valve apparatus of the suction side of the pumping members 11 is closed, and the valve apparatus of the discharge side is opened in order to open the flow paths from said spaces to the nozzles 17. The structural units 14 and 15 are positioned to face each other in order to reduce said spaces and in order to inject the fluid batches to be dosed onto the microtiter plate 13. By means of a few simple motions of the dosing arrangement, all fluid positions 12 of the microtiter plate 13 are filled simultaneously.

The dosing can be continued, in accordance with the procedure described above, as long as the same reagents are being dosed onto the microtiter plate 13. However, if the liquids to be dosed are changed, in between the dosing operations the whole arrangement must be washed in order to prevent contamination. This is carried out by conducting, from the washing circulation conduits 6, washing liquid to between the sliding surfaces 2 of the valve plates 11 at an increased pressure, which surpasses the spring force of the springs 19 and pushes the valve plates 1, la apart, so that the washing liquid can easily be distributed on the whole area of the sliding surfaces 2. The flow channels 3 and the pumping members 11 are also washed by the same washing liquid. After washing, the flow channels 3 can be dried by air blowing.

For a person skilled in the art, it is obvious that the various embodiments of the invention are not restricted to the ones described above by way of example, but can vary within the scope of the appended patent claims. Thus a microtiter plate including 96 fluid positions, as well as a corresponding matrix-like arrangement of flow channels in a valve apparatus is illustrated as a practical example only, and the invention is not bound to any particular number or order of the channels. Likewise the valve apparatus comprising three stacked valve plates is illustrated as an example only, and it could be perfectly possible to arrange the valve functions by only two valve members moving with respect to each other. Moreover, the motion of the valve plate need not be linear, but for example by using a winding motion, the channels can be deviated in order to close the flow paths. In similar fashion, the sliding surfaces of the valve members can be curved instead of planar; they can be for instance cylindrical surfaces, so that the opening and closing thereof is carried out by means of a rotary motion between the surfaces. In the exemplary arrangement, the piston-cylinder combinations performing the suction and injection of reagents can also be replaced by any other pumping members operated in a similar fashion, such as bellows.

## Claims

1. A valve apparatus in order to adjust parallel flows, **characterised** in that said apparatus comprises at least two valve members (1, la) movable with respect to each other, said members including channels (3) constituting parts of parallel flow paths, the ends (4) of said channels being located in opposite sliding surfaces (2) belonging to the valve members, so that in a mutual position of the surfaces where the channel ends match, the flow paths are open, and in a position where the channel ends deviate, the flow paths are closed, and that at least in one of the opposite sliding surfaces (2) of the valve members, there are provided grooves (5) in between the channel ends (4).

2. An apparatus according to claim 1, **characterised** in that said grooves (5) are arranged to serve as washing channels.

3. An apparatus according to claim 1 or 2, **characterised** in that grooves (5) are provided in both of the opposite sliding surfaces (2).

4. An apparatus according to any of the preceding claims, **characterised** in that the opposite sliding surfaces (2) of the valve members are planar surfaces.

5. An apparatus according to claim 4, **characterised** in that the sliding surfaces (2) can be moved in a linear fashion with respect to each other in order to open and close the flow paths (3, 4).

6. An apparatus according to claim 4 or 5, **characterised** in that in the sliding surface (2) of the valve member (1, la), the ends (4) of the channels form a matrix composed of vertical and horizontal rows, and that the grooves (5) form a lattice in between the channel ends.

7. An apparatus according to any of the preceding claims 4 - 6, **characterised** in that the valve members are valve plates (1, la), through which the flow channels (3) are conducted at right angles to the sliding surfaces (2) of the plates.

8. An apparatus according to any of the preceding claims 4 - 7, **characterised** in that said apparatus comprises three valve members (1, la) facing each other, so that he middlemost (la) can be moved with respect to the ones located at the sides (1).

9. An apparatus according to any of the preceding claims 4 - 8, **characterised** in that the valve members (1, la) are mutually charged by means of a pressure spring (19).

10. An apparatus according to any of the preceding claims, **characterised** in that the sliding surfaces (2) of the valve members (1, la) are coated with diamond.

11. A method for manufacturing a valve member for a valve apparatus according to any of the preceding claims, **characterised** in that in the valve member (1, 1a), there are made flow channels (3) and on the member surface, between the channel ends, grooves (5), and that thereafter said surface is ground to form a smooth sliding surface (2) by using a grinding paste that during the grinding process is collected and discharged from between the surfaces via the grooves.

12. A method for adjusting parallel flows by means of an apparatus comprising at least two valve members (1, la) movable with respect to each other, said valve members containing channels (3) constituting parts of parallel flow paths, the ends (4) of said channels being located on opposite sliding surfaces (2) belonging to the valve members, in which case the flow paths are opened by setting the sliding surfaces in a mutual position where the channel ends are matched, and they are closed by setting the sliding surfaces in a position where the channel ends deviate, **characterised** in that when the flow paths are open, therebetween is conducted, at a lower pressure, a washing circulation via grooves (5) made in at least one of the opposite sliding surfaces (2) of the valve members (1, la), in order to prevent contamination between different flows.

13. A method according to claim 12, **characterised** in that liquid flows are adjusted thereby.

14. A method according to claim 12 or 13, **characterised** in that the washing is carried out by liquid.

15. A method according to claim 12 or 13, **characterised** in that by means of said method, small fluid batches are dosed onto a microtiter plate (13) comprising fluid positions (12) arranged in vertical and horizontal rows in a matrix-like fashion.

16. A method according to claim 15, **characterised** in that the dosing is carried out by means of pumping, adjusted by valve apparatuses provided on the suction and discharge sides of parallel pumping members (11), so that the parallel flows are opened and closed simultaneously by said valve apparatuses.

17. A method for washing a valve apparatus according to claim 9 while the parallel flows are interrupted, **characterised** in that the washing is carried out at a pressure that surpasses the spring force of the pressure spring (19) and thus makes the sliding surfaces (2) of the valve members (1, 1a) fall apart, so that the washing liquid is distributed on the whole area of the sliding surfaces.

18. A dosing apparatus, **characterised** in that it comprises a source (10) of the fluids to be dosed, pumping members (11) for creating parallel liquid flows and at least one valve apparatus according to any of the preceding claims 1 - 10.

19. An apparatus according to claim 18, **characterised** in that it comprises valve apparatuses for opening and closing the flow paths (3) both on the suction and discharge sides of the pumping members (11).
